# EUROPEAN PATENT SPECIFICATION

(11) **EP 3 325 938 B1**
(45) Date of publication and mention of the grant of the patent: **11.05.2022**
(21) Application number: 16799459.9
(22) Date of filing: 25.05.2016
(51) Int. Cl.: G01N 1/00, G01N 1/31, G01N 1/30, G01N 35/00, G06K 9/00

(54) **SAMPLE STAINER**
APPAREIL DE COLORATION D'ÉCHANTILLONS
PROBENFÄRBEVORRICHTUNG

(30) Priority: 25.05.2015 IN 2599CH2015
(43) Date of publication of application: 30.05.2018
(73) Proprietor: Natarajan, Adarsh, Bangalore, Karnataka 560078 (IN)
(72) Inventor: NAIR, Siddharth, Palakkad Kerala 678575 (IN)
(74) Representative: Witek, Rafal
(86) International application number: PCT/IB2016/053055
(87) International publication number: WO 2016/189471

(56) References cited:
- EP-A2- 1 671 117
- WO-A1-99/20995
- FR-A1- 2 961 595
- US-A1- 2008 193 333
- US-A1- 2014 065 291
- US-B1- 6 585 936
- US-B2- 8 377 377
- US-B2- 8 377 377

## Description

### TECHNICAL FIELD

The present subject matter is related, to medical screening in general and more particularly, but not exclusively to a method and a system for screening for cervical cancer at point-of-sample collection.

### BACKGROUND

Cervical Cancer is the most deadly cancer for women in the World. Cervical cancer screening is commonly based on cytological and colposcopy analyses. The generally accepted gold standard in screening for cervical Cancer is the Pap smear Test (Papanicolaou test or Pap test). The common Pap smear detects cellular abnormalities and thus the development of potentially pre-cancerous lesions. In a Pap smear, the collected cervical cells are placed on a glass slide, stained and examined by a specially-trained and qualified cytotechnologist using a light microscope. Even though this test has led to a reduction in the incidences of and mortalities caused by cervical cancer, it is a subjective analysis with several known disadvantages, such as an increase in false-negatives and equivocal results as a consequence of debris obscuring abnormal cells. There may be a delay in analysing and providing interpretation of the samples in geographical areas where there is poor infrastructure. This delay not only discourages women from testing but also makes follow up very difficult.

Further, a conventional staining apparatus as disclosed in US8377377 B2 (Angros et al.) comprises plurality of individually operable miniaturized pressurizable reaction compartments or a pressurizable common chamber for individually and independently processing a plurality of microscope slides. Further, this apparatus includes a common application chamber able to contain the plurality of slide support elements, a pressurizable common chamber in communication with the common application chamber, a reagent dispensing means for disposing reagents onto microscope slides in a reagent application position in the common application chamber. However, due to the presence of more number of components and complex structure in Angros, limits the optimised use of the stainer.

In particular, US8377377 B2 discloses a sample stainer, comprising: a trough base configured with a predetermined pattern to hold one or more trough, each trough of the one or more troughs comprising a plurality of compartments and each of the plurality of compartment is capable of being filled with one or more reagents required for staining one or more samples; a slide holder comprising a plurality of compartments, each of the plurality of compartments comprising one or more slots to hold one or more slides having sample collected from users; a motion control unit, coupled with the trough base and the slide holder, configured to control the rotary motion of the trough base and linear motion of the slide holder, and a user interface coupled with the motion control unit, the user interface is configured to receive inputs including slide information and staining process related information from user to perform the staining of the sample; a processor coupled with the user interface; and a memory communicatively coupled to the processor, wherein the memory stores processor-executable instructions, which, on execution, cause the processor to:receive one or more command signals associated with the user inputs from the user interface; actuate the motion control unit to control the rotary motion of the trough base and the linear motion of the slide holder in accordance with the one or more command signals thus received to perform the staining process; and generate a notification signal indicative of completion of the staining process to the user.

Examples for devices applying the "dip and dunk" technology are disclosed in FR 2 961 595 Al, US 2014/065291 Al, US 2014/065291 Al, US 6 585 936 B1 and US 2008/193333 A1.

Hence, there exists a need for a method and a system for screening cervical cancer that has improved effectiveness of the screening at the point-of-sample collection and reduces the delay in delivering the screening results.

### SUMMARY

One or more shortcomings of the prior art are overcome and additional advantages are provided through the present disclosure. Additional features and advantages are realized through the techniques of the present disclosure. Other embodiments and aspects of the disclosure are described in detail herein and are considered a part of the claimed disclosure.

Examples of the present disclosure not forming part of the present invention relate to a method of screening for cervical cancer.

The method comprising the steps of receiving a sample on one or more slides used for collecting the sample and staining the received sample using one or more reagents. The method further comprises the step of capturing one or more set of images of the stained sample positioned at one or more positions and illuminated at a plurality of angular degrees. Upon capturing the one or more set of images of the stained sample, the method performs segmentation into one or more cell regions and further classifying the one or more determined cell regions into one or more cell types based on one or more features extracted from the cell regions. Further, the method comprises the step of determining a confidence score and determining one or more stages of cancer of the one or more cell regions based on the confidence score and one or more cell types thus determined.

In another aspect not forming part of the present invention, the present disclosure relates to a system for screening cervical cancer of a user. The system comprises one or more slides for collecting sample from user and a sample stainer coupled with the slides. The sample stainer is configured to automatically stain the received sample with one or more reagents to obtain a stained sample. The medical screening system further comprises an image acquisition unit configured to capture one or more set of images of the stained sample illuminated at a plurality of angular degrees by positioning the one or more slides at one or more positions. Further, the system comprises a data repository for storing the one or more set of images thus captured. The system also comprises an image processing unit comprising a processor; and a memory communicatively coupled to the processor. The processor is configured to segment the one or more set of images into one or more cell regions and classify the one or more cell regions into one or more cell types based on one or more features extracted from the one or more cell regions. Further, the processor is configured to determine a confidence score indicating probability of the one or more cell regions likely to be cervical cancerous regions and further determine one or more stages of cancer of the one or more cell regions based on the one or more cell type and the confidence score thus determined.

Further, the present disclosure relates to a sample stainer according to claim 1 for automatically staining samples with one or more reagents to obtain the stained sample. The stainer comprises a trough base configured with a predetermined pattern to hold one or more trough. Each trough comprises a plurality of compartments and each compartment is capable of being filled with the one or more reagents required for staining samples. The stainer also comprises a slide holder for holding slides having sample collected from the users. The slide holder comprises a plurality of compartments, each compartment comprising one or more slots to hold the slides. The stainer further comprises a motion control unit coupled with the trough base and the slide holder. The motion control unit is configured to control the rotary motion of the trough base and linear motion of the slide holder during the staining process. The motion control unit comprises a linear motion control unit which comprises at least an artificial arm configured to move in at least linear motion and which is capable of carrying the slide holder and dipping in the one or more troughs filled with one or more reagents. The linear motion control unit further comprises a linear motion actuation unit coupled with the artificial arm. The linear motion actuation unit is configured to actuate at least the linear motion of the artificial arm. The linear motion control unit further comprises a motion limit sensor coupled with the linear motion actuation unit. The motion limit sensor is configured to limit the actuation of the linear motion actuation unit so as to control the movement of the artificial arm based on the user inputs, and to indicate the current position of the artificial arm attached in the linear motion actuation unit.

The stainer also comprises a user interface coupled with the motion control unit, configured to receive inputs including slide information and staining process related information from user to perform the staining of the sample. Furthermore, the stainer comprises a processor coupled with the user interface and a memory communicatively coupled to the processor. The processor is configured to receive one or more command signals associated with the user inputs from the user interface and actuate the motion control unit to control the rotary motion of the trough base and the linear motion of the slide holder in accordance with the one or more command signals thus received to perform the staining process. Upon completion of the staining process, the processor generates a notification signal indicative of completion of the staining process to the user.

Furthermore, the present disclosure relates, in an example not forming part of the present invention, to a method of staining a sample. The method comprising the steps of receiving one or more command signals associated with user inputs from a user interface and actuating a motion control unit to control rotary motion of a trough base and linear motion of a slide holder in accordance with the one or more command signals thus received. Further, the method comprises the step of generating a notification signal indicating completion of the staining process to the user.

The foregoing summary is illustrative only and is not intended to be in any way limiting. In addition to the illustrative aspects, embodiments, and features described above, further aspects, embodiments, and features will become apparent by reference to the drawings and the following detailed description.

### BRIEF DESCRIPTION OF THE DRAWINGS

The novel features and characteristics of the disclosure are explained herein. The embodiments of the disclosure itself, however, as well as a preferred mode of use, further objectives and advantages thereof, will best be understood by reference to the following detailed description of an illustrative embodiment when read in conjunction with the accompanying drawings. One or more embodiments are now described, by way of example only, with reference to the accompanying drawing in which:
**Figure 1** illustrates exemplary architecture of a system for screening for cervical cancer in accordance with some embodiments of the present disclosure;
**Figures 2a, 2b,** and **2c** illustrate exemplary front view, isometric view and top views respectively of an automated sample stainer in accordance with one embodiment of the present disclosure;
**Figure 3a** illustrates an exemplary top view of a trough base of **Figure 2a** in accordance with some embodiments of the present disclosure; **Figures 3b** and **3c** illustrate exemplary isometric view and top view of a trough of **Figure 2a** in accordance with some embodiments of the present disclosure; **Figures 3d** and **3e** illustrate exemplary isometric and top views of a slide holder of **Figure 2a** in accordance with some embodiments of the present disclosure;
**Figures 4a, 4b,** and **4c** illustrate exemplary front view, isometric view and top views respectively of an automated sample stainer in accordance with another embodiment of the present disclosure.

The figures depict embodiments of the disclosure for purposes of illustration only. One skilled in the art will readily recognize from the following description that alternative embodiments of the structures and methods illustrated herein may be employed without departing from the principles of the disclosure described herein.

### DETAILED DESCRIPTION

The foregoing has broadly outlined the features and technical advantages of the present disclosure in order that the detailed description of the disclosure that follows may be better understood. Additional features and advantages of the disclosure will be described hereinafter. It should be appreciated by those skilled in the art that the conception and specific embodiment disclosed may be readily utilized as a basis for modifying or designing other structures for carrying out the same purposes of the present disclosure. The novel features which are believed to be characteristic of the disclosure, both as to its organization and method of operation, together with further objectives and advantages will be better understood from the following description when considered in connection with the accompanying figures. It is to be expressly understood, however, that each of the figures is provided for the purpose of illustration and description only and is not intended as a definition of the limits of the present disclosure.

The present disclosure relates to a method and system for screening cervical cancer at point-of-sample collection. A sample collected from a user may be deposited on a slide and stained with suitable reagents. The stained sample on the slide is then disposed on the system for capturing one or more images of the stained sample. The captured images are then processed to classify the processed images into one or more images of normal and abnormal samples. Based on the classification, one or more reports are generated and forwarded to experts or cytotechnologist or cyto-pathologists for further analysis. Thus, the present disclosure enables the interpretation and screening of the samples at the point-of-sample collection centre and avoids the delay in forwarding the sample to the centralized place for experts analysis and interpretation report being sent back to the point of sample collection.

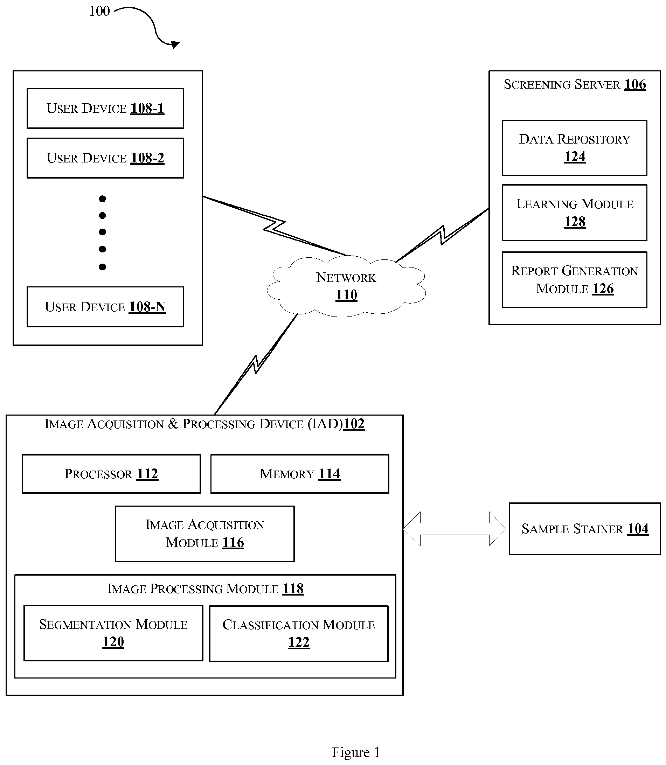

**Figure 1** illustrates block diagram of a system **(100)** for screening for cervical cancer in accordance with some embodiments of the present disclosure.

In one embodiment, the system **(100)** comprises at least one Image Acquisition & Processing Device (IAD) **(102),** a sample stainer **(104),** a screening server **(106)** and one or more user devices **(108-1), (108-2),** ... **(108-N)** (collectively referred to as user device **108)** of one or more users coupled via the network **(110).** The users may be experts like cytotechnologists or cyto-pathologists and the user devices **(108)** may be for example, a mobile device generally a portable computer or a computing device including the functionality for communicating over the network **(110).** For example, the mobile device can be a mobile phone, a tablet computer, a laptop computer, a handheld game console, or any other suitable portable devices. The network **(110)** may include, without limitation, a direct interconnection, local area network (LAN), wide area network (WAN), wireless network (e.g., using Wireless Application Protocol), the Internet, etc.

A patient may visit a health worker or a clinician who obtains a sample of for example, cervical cells using known standard methods. The health worker or the clinician then fixes the sample on a medium such as a slide using known laboratory techniques that enables slide preparation. The slide preparation is a process where the slide is uniformly processed and fixed followed by a process called as cover slipping. A slide is prepared using known fixation techniques of medium such as for example cyto fix, and then subjected to staining process. For example, the slide is prepared by depositing proportionate and representative cells from the sample onto the slide and the slide is then subjected to the staining process. The sample stainer **(104)** comprises a slide holder for holding the slide comprising the sample and is configured to stain the sample with one or more reagents to distinguish the cells from one another using staining techniques. The sample stainer **(104)** may be a portable sample stainer and may be directly coupled with the IAD **(102).** In another embodiment, the sample stainer **(104)** may be integrated within the IAD **(102).** The stained sample is then subjected to screening process by IAD **(102)** to evaluate potential abnormalities in the sample and identify cells or cell-clusters that require further review by experts like cytotechnologists or cyto-pathologists.

The IAD **(102)** may be a portable system and capable of communicating with the sample stainer **(104)** and the screening server **(106)** and the user devices **(108)** via the network **(110).** In one embodiment, the IAD **(102)** includes a central processing unit ("CPU" or "processor") **(112),** a memory **(114)** and an I/O interface (not shown). The I/O interface is coupled with the processor **(112)** and an I/O device. The I/O device is configured to receive inputs via the I/O interface and transmit outputs for displaying in the I/O device via the I/O interface. The IAD **(102)** further includes one or more modules comprising at least an image acquisition module **(116)** and an image processing module **(118)** that comprises a segmentation module **(120)** and a classification module **(122).** The image acquisition module **(116)** is configured to acquire one or more set of images of the stained sample illuminated by an illumination source at a plurality of angular degrees positioning the stained sample at one or more positions. Upon capturing, the segmentation module **(120)** segments the one or more set of images of the stained sample into one or more cell regions for further classification. The classification module **(122)** classifies the one or more cell regions into one or more cell types based on one or more features extracted from the one or more cell regions. Upon classification, the image processing module **(118)** determines a confidence score indicating probability of the one or more cell regions likely to be cervical cancerous regions. Based on the one or more cell type and the confidence score, the image processing module **(118)** determines one or more stages of cancer of the one or more cell regions. The image processing module **(118)** further enables the report generation based on the determination of stages of cancerous cell from cell regions.

In one embodiment, the screening server **(106)** is configured to generate the report based on the determination of stages of cancerous cell by the image processing module **(118).** The screening server **(106)** comprises a data repository **(124)** configured to store the one or more set of images thus captured by the image acquisition module **(116).** The data repository **(124)** is also configured to store one or more training dataset comprising training images of one or more cell types and one or more stages of cancer, one or more data models and report generated. In one aspect, the screening server **(106)** comprises a report generation module **(126)** and a learning module **(128).** In another embodiment, the screening server **(106)** comprises the image processing module **(118).** The report generation module **(126)** is configured to generate one or more report comprising information associated with the one or more cell regions, the cell type and the confidence score, one or more recommendations of follow-up test procedures to be conducted and analysis opinion provided by a cytologist or by the image processing module in the server based on the cell type and the confidence score thus determined. The screening server **(106)** also enables transmission of the one or more reports generated to the user device **(108)** and also to point of care centres. In one example, the screening server **(106)** transmits one or more notifications to the user device **(108)** via email/API/web interface/SMS or other channels of information to users regarding scheduling next visit, reports, and system status/updates.

Upon report generation, the learning module **(128)** is configured to update one or more data models previously created and stored in the data repository **(124)** of the screening server **(106).** In one embodiment, the learning module **(128)** is configured to create the one or data models comprising the one or more set of images of the stained sample, one or more cell regions, the cell type and the confidence score associated with a particular sample collected from a particular user along with relevant parameters and features that are obtained and observed during the image processing. Further, the learning module **(128)** is configured to update the one or more data models and the machine learning models and relevant parameters associated with the sample obtained during the image processing with the cell type and the confidence score associated with a recently collected sample and any inputs received from the user device **(108)** including opinion or annotation regarding the confirmation of cell analysis.

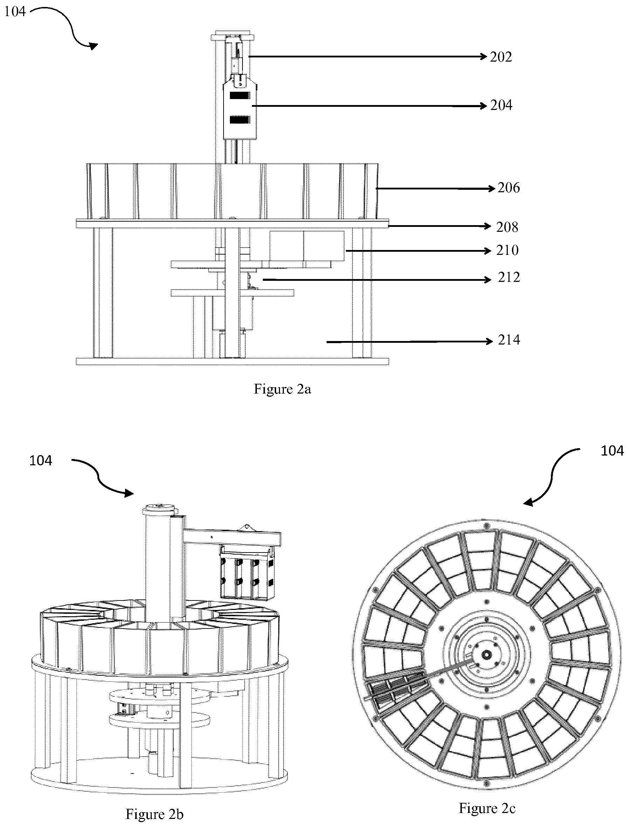

**Figures 2a, 2b,** and **2c** illustrate exemplary front view, isometric view and top views respectively of an automated sample stainer in accordance with one embodiment of the present disclosure.

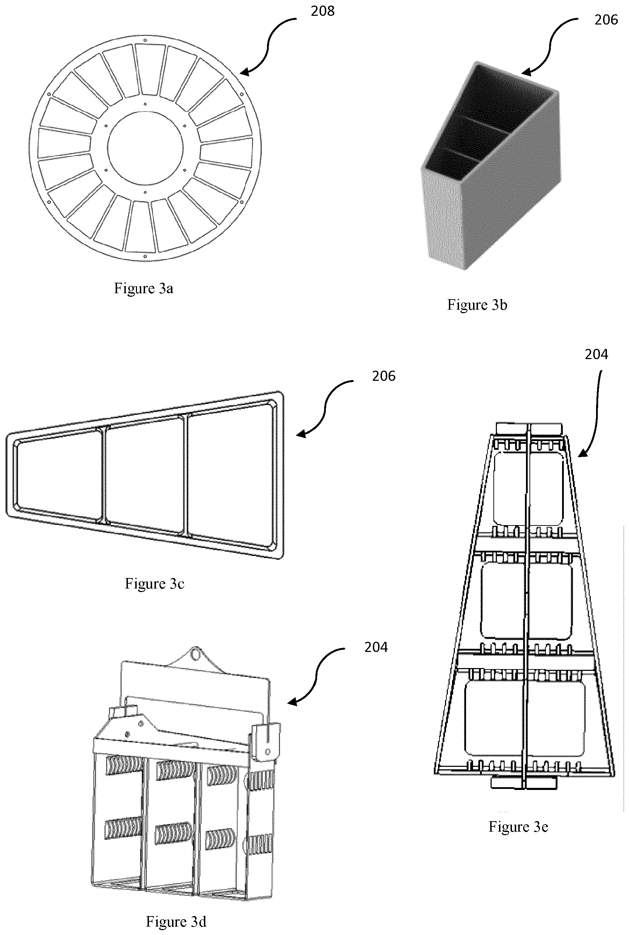

As illustrated, the automated sample stainer **(104)** comprises a linear motion control unit **(202),** a slide holder **(204),** a trough **(206),** a trough base & enclosure **(208),** an actuation control **(210),** a carousel control unit **(212)** and a user interface **(214).** The trough base **(208),** as illustrated in **Figure 3a****,** is configured with a predetermined pattern to hold the one or more trough **(206).** In one example, the trough base **(208)** comprises 20 troughs filled with the one or more reagents. The enclosure is configured for housing the sample stainer, and made of light weight material for enabling ease of carrying. The enclosure also helps in improving the thermodynamics of the system, easy handling and also prevents the components of the automated stainer **(104)** from having any kind of direct impact in any case of mishandling.

As illustrated in **Figures 3b** and **3c****,** each trough **(206)** comprises a plurality of compartments and each compartment is capable of being filled with one or more reagents required for staining one or more samples. The slide holder **(204)** is also configured with a plurality of compartments, each compartment comprising one or more slots to hold one or more slides having sample collected from users. **Figures 3d** and **3e** illustrate an exemplary slide holder with three compartments for holding one or more slots for holding sample slides. In one example, each trough **(206)** comprises three compartments; each compartment is configured to carry 6, 8 and 10 or more slides respectively.

The linear motion control unit **(202)** and the carousel control unit **(212)** can be collectively referred to as motion control unit. The motion control unit is coupled with the trough base **(208)** and the slide holder **(204),** configured to control the rotary motion of the trough base **(208)** and linear motion of the slide holder **(204).** The user interface **(214)** is coupled with the motion control unit, configured to receive inputs including slide information and staining process related information from user to perform the staining of the sample.

The linear motion control unit **(202)** comprises at least an artificial arm configured to move in at least linear motion i.e. along the Z-axis and capable of carrying the slide holder **(204)** and dipping in the one or more trough **(206)** filled with one or more reagents for a predetermined time period and for predetermined number of dippings. The linear motion control unit **(202)** also comprises a linear motion actuation unit coupled with the artificial arm, configured to actuate at least the linear motion of the artificial arm. Further, the linear motion control unit **(202)** comprises a motion limit sensor coupled with the linear motion actuation unit, configured to limit the actuation of the linear motion actuation unit so as to control the movement of the artificial arm based on the user inputs. The motion limit sensor is configured to indicate the current position of the artificial arm attached in the linear motion actuation unit.

The carousel motion control unit **(212)** comprises at least a rotary turn table configured to rotate in at least radial motion and capable of carrying the one or more trough **(206)** filled with one or more reagents. Further, the carousel motion control unit **(212)** comprises a carousel motion actuation unit coupled with the rotary turn table, configured to actuate at least the radial motion of the rotary turn table. Furthermore, the carousel motion control unit **(212)** comprises one or more position sensors coupled with the carousel motion actuation unit, configured to provide at least information on actual movement of the carousel motion actuation unit and movement of the artificial arm attached to the linear actuation system by at least one trough **(506).** The one or more position sensor also indirectly provides information related to the current step in the staining process.

The actuation control **(210)** comprises of one or more motors and drivers to enable linear motion in the Z-axis. Further, the automated stainer **(104)** comprises a processor coupled with the user interface and a memory communicatively coupled to the processor. The processor is configured to receive one or more command signals associated with the user inputs from the user interface and actuate the motion control unit to control the rotary motion of the trough base and the linear motion of the slide holder in accordance with the one or more command signals thus received to perform the staining process. Upon completion of the staining process, the processor generates a notification signal indicative of completion of the staining process to the user.

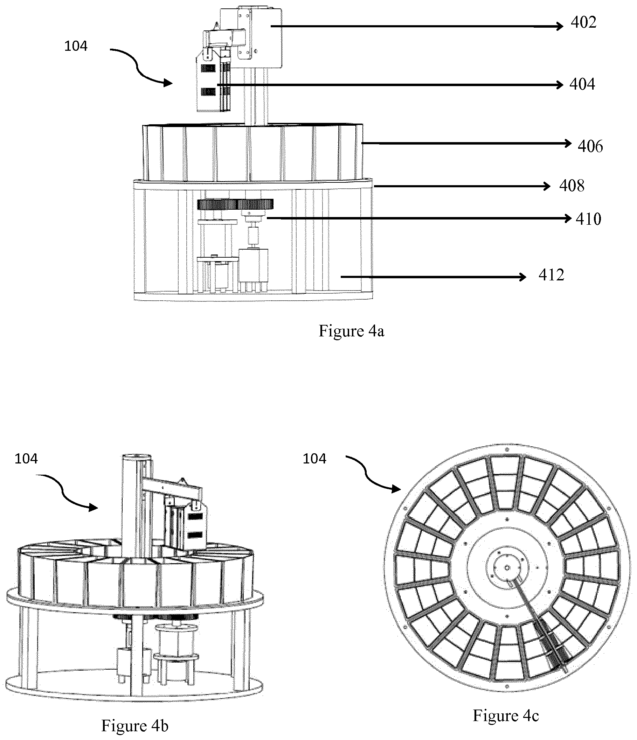

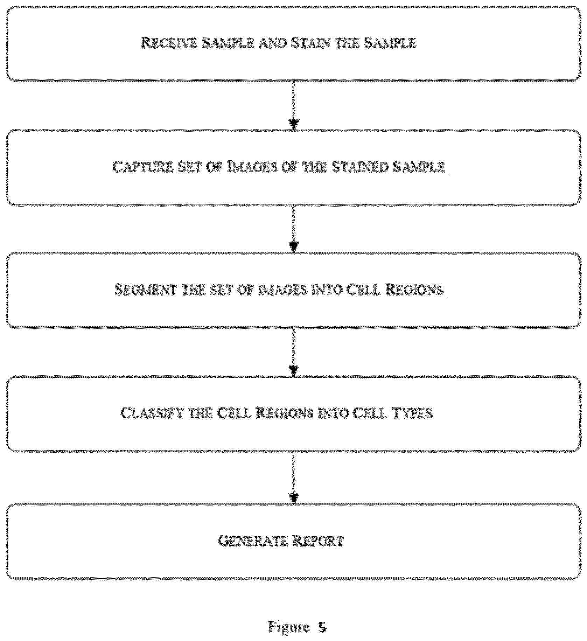

**Figures 4a, 4b,** and **4c** illustrate exemplary front view, isometric view and top views respectively of the automated sample stainer **(104)** in accordance with another example not forming part of the present disclosure. The automated sample stainer, as illustrated, comprises at least a linear motion control unit **(402),** a slide holder **(404),** a trough **(406),** a trough base & enclosure **(408),** a carousel control unit **(410)** and a user interface **(412).**

### Advantages of the Present Invention

The present invention relates to a portable, low weight, easy to carry slide stainer used for staining samples collected at point of care centres. Further, the stainer is compartmentalized into smaller compartments so as to accommodate multiple reagents and optimize the usage of trough in the staining process. The device can be operated by an unskilled resource with a minimum training to operate the slide stainer.

As described above, the modules, amongst other things, include routines, programs, objects, components, and data structures, which perform particular tasks or implement particular abstract data types. The modules may also be implemented as, signal processor(s), state machine(s), logic circuitries, and/or any other device or component that manipulate signals based on operational instructions. Further, the modules can be implemented by one or more hardware components, by computer-readable instructions executed by a processing unit, or by a combination thereof.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope and of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., are non-transitory. Examples include random access memory (RAM), read-only memory (ROM), volatile memory, non-volatile memory, hard drives, CD ROMs, DVDs, flash drives, disks, and any other known physical storage media.

The scope of the invention is defined by the claims.

With respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

## Claims

1. A sample stainer (104), comprising:
a trough base (208) configured with a predetermined pattern to hold one or more trough (206), each trough (206) of the one or more troughs (206) comprising a plurality of compartments and each of the plurality of compartment is capable of being filled with one or more reagents required for staining one or more samples;
a slide holder (204) comprising a plurality of compartments, each of the plurality of compartments comprising one or more slots to hold one or more slides having sample collected from users;
a motion control unit (202,210,212), coupled with the trough base (208) and the slide holder (204), configured to control the rotary motion of the trough base (208) and linear motion of the slide holder (204), wherein the motion control unit (202,210,212) comprises a linear motion control unit (202), wherein the linear motion control unit (202) comprises at least an artificial arm configured to move in at least linear motion and capable of carrying the slide holder (204) and dipping in the one or more troughs (206) filled with one or more reagents, wherein the linear motion control unit further comprises a linear motion actuation unit coupled with the artificial arm, the linear motion actuation unit being configured to actuate at least the linear motion of the artificial arm, and a motion limit sensor coupled with the linear motion actuation unit, the motion limit sensor being configured to limit the actuation of the linear motion actuation unit so as to control the movement of the artificial arm based on the user inputs, the motion limit sensor further being configured to indicate the current position of the artificial arm attached in the linear motion actuation unit;
and
a user interface (214) coupled with the motion control unit (202,210,212),the user interface (214) is configured to receive inputs including slide information and staining process related information from user to perform the staining of the sample;
a processor coupled with the user interface (214); and
a memory communicatively coupled to the processor, wherein the memory stores processor-executable instructions, which, on execution, cause the processor to:
receive one or more command signals associated with the user inputs from the user interface (214);
actuate the motion control unit (202,210,212) to control the rotary motion of the trough base (208) and the linear motion of the slide holder (204) in accordance with the one or more command signals thus received to perform the staining process; and
generate a notification signal indicative of completion of the staining process to the user.

2. The sample stainer (104) as claimed in claim 1, wherein the linear motion control unit (202) comprises:
a linear motion actuation unit (210) coupled with the artificial arm, configured to actuate at least the linear motion of the artificial arm; and
a motion limit sensor coupled with the linear motion actuation unit (210), configured to limit the actuation of the linear motion actuation unit (210) so as to control the movement of the artificial arm based on the user inputs.

3. The sample stainer (104) as claimed in claim 1, wherein the motion control unit (202,212,210) further comprises a carousel motion control unit (212) coupled with the linear motion control unit (202), wherein the carousel motion control unit (212) comprises at least:
a rotary turn table configured to rotate in at least radial motion and capable of carrying the one or more trough filled with one or more reagents;
a carousel motion actuation unit (210) coupled with the rotary turn table, configured to actuate at least the radial motion of the rotary turn table; and
one or more position sensors coupled with the carousel motion actuation unit (210), configured to provide at least information on actual movement of the carousel motion actuation unit (210) and movement of at least one trough (206).

4. The sample stainer (104) as claimed in claim 1, wherein each trough (206) comprises three compartments, each compartment is configured to carry 6, 8 and 10 slides respectively.

5. The sample stainer (104) as claimed in claim 1, wherein the trough base (208) comprises 20 troughs (206) filled with the one or more reagents.

6. The sample stainer (104) as claimed in claim 1, further comprising an enclosure for housing the sample stainer (104), and made of light weight material.

## Patentansprüche

1. Probenfärber (104), der aufweist:
eine Wannenbasis (208), die mit einem vorbestimmten Muster ausgestaltet ist, um eine oder mehrere Wannen (206) zu halten, wobei jede Wanne (206) der einen oder mehreren Wannen (206) eine Vielzahl von Kammern aufweist und jede der Vielzahl von Kammern mit einem oder mehreren Reagenzien gefüllt werden kann, die zum Färben einer oder mehrerer Proben erforderlich sind;
einen Objektträgerhalter (204), der eine Vielzahl von Kammer aufweist, wobei jede der Vielzahl von Kammern einen oder mehrere Spalte aufweist, um einen oder mehrere Objektträger mit einer von Benutzern entnommenen Proben zu halten;
eine Bewegungssteuereinheit (202, 210, 212), die mit der Wannenbasis (208) und dem Objektträgerhalter (204) gekoppelt ist und dazu ausgebildet ist, die Drehbewegung der Wannenbasis (208) und die Linearbewegung des Objektträgerhalters (204) zu steuern, wobei die Bewegungssteuereinheit (202, 210, 212) eine Linearbewegungssteuereinheit (202) aufweist, wobei die Linearbewegungssteuereinheit (202) zumindest einen künstlichen Arm aufweist, der dazu ausgebildet ist, sich in zumindest einer Linearbewegung zu bewegen, und der in der Lage ist, den Objektträgerhalter (204) zu tragen und in die eine oder mehreren Wannen (206) einzutauchen, die mit einem oder mehreren Reagenzien gefüllt sind, wobei die Linearbewegungssteuereinheit ferner eine Linearbewegungsauslöseeinheit aufweist, die mit dem künstlichen Arm gekoppelt ist, wobei die Linearbewegungsauslöseeinheit dazu ausgebildet ist, zumindest die Linearbewegung des künstlichen Arms auszulösen, und einen Bewegungsbegrenzungssensor aufweist, der mit der Linearbewegungsauslöseeinheit gekoppelt ist und der dazu ausgebildet ist, die Auslösung der Linearbewegungsauslöseeinheit zu begrenzen, um die Bewegung des künstlichen Arms basierend auf den Benutzereingaben zu steuern, wobei der Bewegungsbegrenzungssensor ferner dazu ausgebildet ist, die aktuelle Position des in der Linearbewegungsauslöseeinheit angebrachten künstlichen Arms anzugeben; und
eine Benutzerschnittstelle (214), die mit der Bewegungssteuereinheit (202, 210, 212) gekoppelt ist, wobei die Benutzerschnittstelle (214) dazu ausgebildet ist, Eingaben vom Benutzer zu empfangen, einschließlich Objektträgerinformationen und auf den Färbeprozess bezogene Informationen, um das Färben der Probe durchzuführen;
einen Prozessor, der mit der Benutzerschnittstelle (214) gekoppelt ist; und
einen Speicher, der kommunikativ mit dem Prozessor gekoppelt ist, wobei der Speicher vom Prozessor ausführbare Instruktionen speichert, die bei Ausführung den Prozessor zu Folgendem veranlassen:
Empfangen ein oder mehrerer Befehlssignale, die den Benutzereingaben von der Benutzerschnittstelle (214) zugeordnet sind;
Betätigen der Bewegungssteuereinheit (202, 210, 212), um die Drehbewegung der Wannenbasis (208) und die Linearbewegung des Objektträgerhalters (204) entsprechend den ein oder mehreren so empfangenen Befehlssignalen zu steuern, um den Färbeprozess durchzuführen; und
Erzeugen eines Benachrichtigungssignals, das dem Benutzer den Abschluss des Färbeprozesses anzeigt.

2. Probenfärber (104) nach Anspruch 1, wobei die Linearbewegungssteuereinheit (202) aufweist:
eine Linearbewegungsbetätigungseinheit (210), die mit dem künstlichen Arm gekoppelt ist und dazu ausgebildet ist, zumindest die Linearbewegung des künstlichen Arms auszulösen; und
einen Bewegungsbegrenzungssensor, der mit der Linearbewegungsbetätigungseinheit (210) gekoppelt ist und dazu ausgebildet ist, die Betätigung der Linearbewegungsbetätigungseinheit (210) zu begrenzen, um die Bewegung des künstlichen Arms basierend auf den Benutzereingaben zu steuern.

3. Probenfärber (104) nach Anspruch 1, wobei die Bewegungssteuereinheit (202, 212, 210) ferner eine Karussellbewegungssteuerungseinheit (212) aufweist, die mit der Linearbewegungssteuereinheit (202) gekoppelt ist, wobei die Karussellbewegungssteuerungseinheit (212) zumindest Folgendes aufweist:
einen Drehtisch, der dazu ausgebildet ist, sich in zumindest einer radialen Bewegung zu bewegen, und der in der Lage ist, die eine oder mehreren Wannen zu tragen, die mit einem oder mehreren Reagenzien gefüllt sind;
eine Karussellbewegungsbetätigungseinheit (210), die mit dem Drehtisch gekoppelt ist und dazu ausgebildet ist, zumindest die radiale Bewegung des Drehtisches auszulösen; und
einen oder mehrere Positionssensoren, die mit der Karussellbewegungsbetätigungseinheit (210) gekoppelt sind und dazu ausgebildet sind, zumindest Informationen über die tatsächliche Bewegung der Karussellbewegungsbetätigungseinheit (210) und die Bewegung von mindestens einer Wanne (206) bereitzustellen.

4. Probenträger (104) nach Anspruch 1, wobei jede Wanne (206) drei Kammern aufweist, wobei jede Kammer dazu ausgebildet ist, 6, 8 bzw. 10 Objektträger zu tragen.

5. Probenfärber (104) nach Anspruch 1, wobei die Wannenbasis (208) 20 Wannen (206) aufweist, die mit dem einen oder den mehreren Reagenzien gefüllt sind.

6. Probenfärber (104) nach Anspruch 1, der ferner ein Gehäuse zum Unterbringen des Probenfärbers (104) aufweist, das aus leichtem Material besteht.

## Revendications

1. Appareil de coloration d'échantillon (104), comprenant :
une base pour bac (208) configurée avec un motif prédéterminé pour contenir un ou plusieurs bacs (206), chaque bac (206) des un ou plusieurs bacs (206) comprenant une pluralité de compartiments et chacun de la pluralité de compartiments est apte à être rempli avec un ou plusieurs réactifs nécessaires pour la coloration d'un ou de plusieurs échantillons ;
un porte-lame (204) comprenant une pluralité de compartiments, chacun de la pluralité de compartiments comprenant une ou plusieurs fentes pour retenir une ou plusieurs lames ayant un échantillon collecté auprès d'utilisateurs ;
une unité de commande de mouvement (202, 210, 212), couplée à la base pour bac (208) et au porte-lame (204), configurée pour commander le mouvement rotatif de la base pour bac (208) et le mouvement linéaire du porte-lame (204), dans lequel l'unité de commande de mouvement (202, 210, 212) comprend une unité de commande de mouvement linéaire (202), dans lequel l'unité de commande de mouvement linéaire (202) comprend au moins un bras artificiel configuré pour se déplacer selon un mouvement au moins linéaire et apte à porter le porte-lame (204) et de plonger dans les un ou plusieurs bacs (206) remplis avec un ou plusieurs réactifs, dans lequel l'unité de commande de mouvement linéaire comprend en outre une unité d'actionnement de mouvement linéaire couplée au bras artificiel, l'unité d'actionnement de mouvement linéaire étant configurée pour actionner au moins le mouvement linéaire du bras artificiel, et un capteur de limite de mouvement couplé à l'unité d'actionnement de mouvement linéaire, le capteur de limite de mouvement étant configuré pour limiter l'actionnement de l'unité d'actionnement de mouvement linéaire de manière à commander le mouvement du bras artificiel sur la base des entrées de l'utilisateur, le capteur de limite de mouvement étant configuré en outre pour indiquer la position actuelle du bras artificiel attaché à l'unité d'actionnement de mouvement linéaire ; et
une interface utilisateur (214) couplée à l'unité de commande de mouvement (202, 210, 212), l'interface utilisateur (214) est configurée pour recevoir des entrées comprenant des informations de lame et des informations relatives au procédé de coloration provenant d'un utilisateur pour effectuer la coloration de l'échantillon ;
un processeur couplé à l'interface utilisateur (214) ; et
une mémoire couplée en communication au processeur, dans lequel la mémoire stocke des instructions exécutables par processeur qui, lors de l'exécution, amènent le processeur à :
recevoir un ou plusieurs signaux de commande associés aux entrées de l'utilisateur depuis l'interface utilisateur (214) ;
actionner l'unité de commande de mouvement (202, 210, 212) pour commander le mouvement rotatif de la base pour bac (208) et le mouvement linéaire du porte-lame (204) conformément aux un ou plusieurs signaux de commande ainsi reçus pour mettre en oeuvre le procédé de coloration ; et
générer un signal de notification indiquant l'achèvement du procédé de coloration à l'utilisateur.

2. Appareil de coloration d'échantillon (104) selon la revendication 1, dans lequel l'unité de commande de mouvement linéaire (202) comprend :
une unité d'actionnement de mouvement linéaire (210) couplée au bras artificiel, configurée pour actionner au moins le mouvement linéaire du bras artificiel ; et
un capteur de limite de mouvement couplé à l'unité d'actionnement de mouvement linéaire (210), configuré pour limiter l'actionnement de l'unité d'actionnement de mouvement linéaire (210) de manière à commander le mouvement du bras artificiel sur la base des entrées de l'utilisateur.

3. Appareil de coloration d'échantillon (104) selon la revendication 1, dans lequel l'unité de commande de mouvement (202, 212, 210) comprend en outre une unité de commande de mouvement de carrousel (212) couplée à l'unité de commande de mouvement linéaire (202), dans lequel l'unité de commande de mouvement de carrousel (212) comprend au moins :
une table tournante rotative configurée pour tourner selon un mouvement au moins radial et apte à porter les un ou plusieurs bacs remplis avec un ou plusieurs réactifs ; une unité d'actionnement de mouvement de carrousel (210) couplée à la table tournante rotative, configurée pour actionner au moins le mouvement radial de la table tournante rotative ; et
un ou plusieurs capteurs de position couplés à l'unité d'actionnement de mouvement de carrousel (210), configurés pour fournir au moins des informations sur le mouvement réel de l'unité d'actionnement de mouvement de carrousel (210) et le mouvement d'au moins un bac (206).

4. Appareil de coloration d'échantillon (104) selon la revendication 1, dans lequel chaque bac (206) comprend trois compartiments, chaque compartiment est configuré pour porter respectivement 6, 8 et 10 lames.

5. Appareil de coloration d'échantillon (104) selon la revendication 1, dans lequel la base pour bac (208) comprend 20 bacs (206) remplis avec les un ou plusieurs réactifs.

6. Appareil de coloration d'échantillon (104) selon la revendication 1, comprenant en outre une enceinte pour loger l'appareil de coloration d'échantillon (104), et faite d'un matériau léger.
